Europäisches Patentamt

European Patent Office

Office européen des brevets

(11) Veröffentlichungsnummer: **0 365 082**
**A1**

## (12) EUROPÄISCHE PATENTANMELDUNG

(21) Anmeldenummer: **89202573.5**

(22) Anmeldetag: **12.10.89**

(51) Int. Cl.5: **G02B 6/44**

(30) Priorität: **18.10.88 DE 3835424**

(43) Veröffentlichungstag der Anmeldung:
**25.04.90 Patentblatt 90/17**

(84) Benannte Vertragsstaaten:
**DE ES FR GB IT**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **ES FR GB IT**

(72) Erfinder: **Deusser, Peter**
**Hazebrouckstrasse 2**
**D-5000 Köln 90(DE)**
Erfinder: **Ehrig, Lorena**
**Im Blauen Garn**
**D-5047 Wesseling(DE)**
Erfinder: **Holzmann, Olaf**
**Sauerlandstrasse 4**
**D-5000 Köln 91(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Aufnahmeeinrichtung für mindestens zwei LWL-Spleisskassetten.**

(57) Die Erfindung betrifft eine Aufnahmeeinrichtung für mindestens zwei LWL-Spleißkassetten vorbestimmter Dicke, welche parallele Wandungsansätze (2,4) aufweist, zwischen welchen Rinnen (5) zur Aufnahme der Spleißkassetten gebildet sind. Für die Kassetten wird weniger Platz benötigt, wenn die Mittellinien (22) der Wandungsansätze (3,4) in einem der Dicke einer LWL-Spleißkassette entsprechenden Abstand (a) aufeinanderfolgen, und daß die Breite der Rinne (5) bzw. die Wandstärke der Einlegewandungen der Spleißkassetten (12) kleiner als die gesamte Dicke der Spleißkassette sind.

Fig.1

Fig.2

EP 0 365 082 A1

## Aufnahmeeinrichtung für mindestens zwei LWL-Spleißkassetten

Die Erfindung bezieht sich auf eine Aufnahmeeinrichtung für mindestens zwei LWL-Spleißkassetten vorbestimmter Dicke, welche parallele Wandungsansätze aufweist, zwischen welchen Rinnen zur Aufnahme der Spleißkassetten gebildet sind.

Beispielsweise in Verteilergehäusen für optische Kabel müssen eine Vielzahl von LWL-Spleißkassetten herausnehmbar untergebracht werden. In die LWL-Spleißkassetten sind Verfügungslängen der LWL (Lichtwellenleiter) geordnet untergebracht, welche bei der Herstellung von Spleißverbindungen oder von Schaltverbindungen benötigt werden. Je nach Anwendungsfall ist die Anzahl der in ein Gehäuse unterzubringenden Kassetten verschieden. Insbesondere bei Verteilergehäusen, in denen Verbindungen zwischen zahlreiche LWL enthaltenden optischen Kabeln hergestellt werden müssen, ist der zur Unterbringung der Kassetten benötigte Raumanteil erheblich.

Bei einer durch die DE-A 35 0 625 bekannten Anordnung der eingangs genannten Art liegen in benachbarte Rinnen eines Verteilergehäuses eingelegte Kassetten mit erheblichem Abstand nebeneinander.

Der Erfindung liegt die Aufgabe zugrunde, eine Aufnahmeeinrichtung der eingangs genannten Art derart zu gestalten, daß für die Unterbringung der Kassetten weniger Platz beansprucht wird.

Die Lösung gelingt dadurch, daß die Mittellinien der Wandungsansätze in einem der Dicke einer LWL-Spleißkassette entsprechenden Abstand aufeinanderfolgen, und daß die Breite der Rinne bzw. die Wandstärke der Einlegewandungen der Spleißkassetten kleiner als die gesamte Dicke der Spleißkassette sind.

Bei der erfindungsgemäßen Aufnahmeeinrichtung liegen die LWL-Kassetten praktisch abstandslos aneinander an, so daß für deren Unterbringung nur ein unbedingt erforderlicher Mindestraum verfügbar sein muß, welcher nur unwesentlich größer als das Volumen der LWL-Spleißkassetten ist.

Gemäß einer kompakten Ausführung ist vorgesehen, daß für jede Spleißkassette eine einzige lang gestreckte Rinne vorgesehen ist, welche jeweils durch an einer flachen Bodenwandung angeordnete Wandungsansätze gebildet sind.

Bei einer vorteilhaften Ausführungsform ist vorgesehen, daß die Breite der Rinne der Gesamtdicke zweier an einer Kassette angeformter und einen Wandungsansatz umgreifender Einlegewandungen entspricht. Dabei hat jede Spleißkassette zwei dünne Einlegewandungen, welche jeweils einen Wandungsansatz der Aufnahmeeinrichtung umfassen. In jeder Rinne liegt dann je eine Einlegewandung zweier benachbarter Spleißkassetten.

Bei einer bevorzugten Lösung ist vorgesehen, daß die Breite der Rinne der Dicke einer Einlegewandung entspricht. Die Kassetten haben dann nur eine einzige Einlegewandung. Dabei können die Wandstärken der Wandungsansätze der Aufnahmeeinrichtung und der Einlegewandungen der Spleißkassetten relativ groß sein, so daß sich ein stabiler Aufbau ergibt.

Bei einer vorteilhaften Weiterbildung der Erfindung ist vorgesehen, daß die Aufnahmeeinrichtung aus mindestens zwei gleichartigen Aufnahmeteilen besteht, welche mit einer parallel zu den Wandungsansätzen verlaufenden Fügeebene insbesondere über Formschlußelemente aneinandergefügt sind. Dann können mittels eines einheitlichen Grundelements verschieden große Aufnahmeeinrichtungen gebildet werden. Für verschieden große Verteilergehäuse brauchen keine für deren spezifische Bauart angepaßte Aufnahmeeinrichtungen hergestellt und gelagert zu werden.

Eine weitere Ausgestaltung ist dadurch gekennzeichnet, daß ein Aufnahmeteil aus zwei gleichartigen Aufnahmehälften besteht, welche mit einer senkrecht zu den Wandungsansätzen verlaufenden Fügungsebene insbesondere formschlüssig aneinandergefügt sind. Bei dieser Ausführung ist das zur Herstellung einer erfindungsgemäßen Aufnahmeeinrichtung erforderliche Formwerkzeug kleiner, so daß die Herstellungskosten verringert werden. Darüberhinaus besteht die Möglichkeit, die Aufnahmehälften einzeln zur Halterung von Spleißkassetten an deren Schmalseite zu verwenden.

Die Spleißkassetten sind vorteilhaft durch federnde Rastelemente in den Rinnen der Aufnahmeeinrichtung gehalten.

Die federnden Rastnasen können bei einer aus Kunststoff geformten Spleißkassette ohne zusätzlichen Aufwand in einer Ausnehmung einer Einlegewandung eingeformt sein.

Die Erfindung wird anhand der Beschreibung von in der Zeichnung dargestellten vorteilhaften Ausführungsbeispielen näher erläutert.

Fig. 1 zeigt eine Seitenansicht einer Aufnahmehälfte für eine erfindungsgemäße Aufnahmeeinrichtung.

Fig. 2 zeigt eine Aufsicht auf die Aufnahmehälfte nach Fig. 1.

Fig. 3 zeigt perspektivisch in vereinfachter Darstellung eine Aufnahmeeinrichtung, welche aus in den Figuren 1 und 2 dargestellten Aufnahmehälften zusammengefügt ist.

Fig. 4 zeigt die Vorderansicht einer vereinfacht dargestellten Spleißkassette,

Fig. 5 zeigt in gegenüber 4 vergrößerter Darstellung eine Rastnase der Spleißkassette,

Fig. 6 zeigt eine bevorzugte Einbaulage einer Kassette in eine Aufnahmeeinrichtung,

Fig. 7 zeigt eine alternative Einbringungsmöglichkeit von Spleißkassetten,

Fig. 8 zeigt eine Gruppe von Spleißkassetten, welche an beiden Schmalseiten von Aufnahmehälften zu einem Stapel zusammengehalten sind.

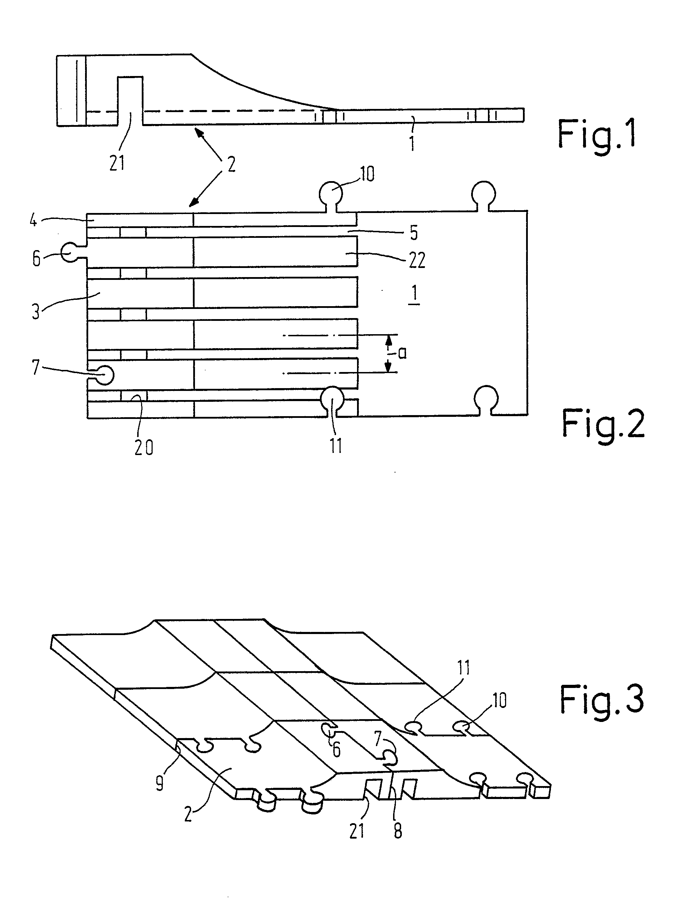

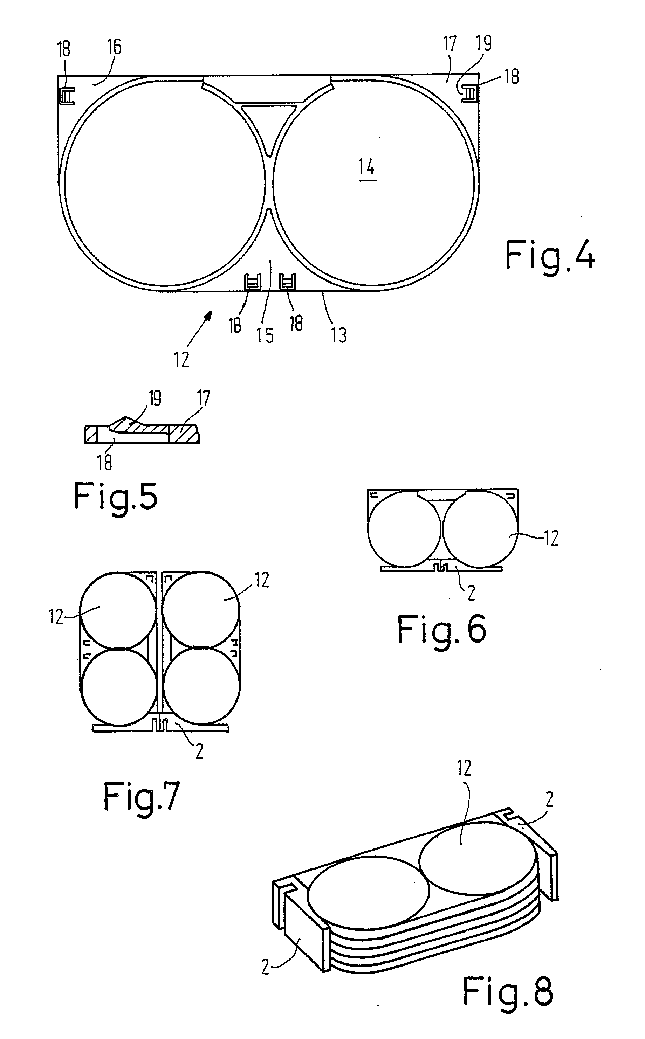

An einer Bodenwandung 1 der in den Figuren 1 und 2 dargestellten Aufnahmehälfte 2 sind im mittleren Bereich breite Wandungsansätze 3 und an den Rändern etwa halb so breite Wandungsansätze 4 angeordnet, zwischen denen Rinnen 5 zur Einfügung einer Einlegewandung einer in Fig. 4 dargestellten LWL-Spleißkassette 12 gebildet sind.

Mittels einer Fügenase 6 und einer entsprechenden Fügeöffnung 7 können zwei Aufnahmehälften 2 gemäß Fig. 3 mit einer senkrecht zu den Rinnen 5 verlaufenden Fügungsebene 8 zu einem Aufnahmeteil zusammengefügt werden. Mehrere jeweils aus Aufnahmehälften 2 bestehende Aufnahmeteile können in beliebiger Anzahl mit parallel zu den Rinnen 5 verlaufender Fügungsebene 9 mittels korrespondierender Fügenasen 10 und Fügeöffnungen 11 zusammengefügt werden.

In Fig. 3 sind drei zusammenge fügte Aufnahmeteile angedeutet. Der Übersichtlichkeit wegen sind dabei keine Rinnen 5 eingezeichnet.

In die Aufnahmeeinrichtung nach Fig. 3 können entweder fünfzehn Kassetten der in Fig. 4 dargestellten Art entsprechend einer Lage nach Fig 6 oder dreißig Kassetten 12 hochkant in einer Lage nach Fig. 7 eingelegt werden.

Da die Abstände a der Mittellinien 22 der Wandungsansätze 3 nur geringfügig größer als die Gesamtdicke einer Kassette 12 ist, liegen alle eingelegten Kassetten praktisch unmittelbar aneinander.

Eine LWL-Spleißkassette 12 besteht aus Kunststoff. An der flachen Grundwandung 13 sind abstehende Aufnahmebehälter 14 angeformt, in welche Verfügungslängen von LWL ablegbar sind. Die Gesamtdicke einer Spleißkassette 12 ergibt sich aus der Summe der Dicken der Basiswandung 13 und der Aufnahmebehälter 14.

Nicht von den Aufnahmebehältern 14 belegte Bereiche der Grundwandung 13 dienen als Einlegewandungen 15 bzw. 16 und 17. Die Einlegewandung 15 dient zur Einlegung in Rinnen 5 entsprechend Fig. 6, die Einlegewandungen 16 oder 17 zur Einlegung entsprechend Fig. 7.

In Öffnungen 18 der Einlegewandungen 15, 16 und 17 sind federnde Rastnasen 19 eingeformt, wie es Fig. 5 in vergrößerter Darstellung verdeutlicht. Die Rastnasen 19 rasten beim Einlegen der Spleißkassetten 12 in die Aufnahmeeinrichtung hinter Rastkanten 20 ein, welche im Aufnahmeteil 2 in formtechnisch einfacher Weise durch Einformen einer durchgehenden und sich über sämtliche Rinnen 5 erstreckenden Nut 21 gebildet wurden.

Gemäß Fig. 8 kann eine Gruppe von fünf Spleißkassetten 12 mittels zweier auf der Schmalseite aufgerasteter Aufnahmehälften 2 zu einem kompakten Stapel vereinigt werden, welcher dann als Block in nicht dargestellte zugeordnete und den Aufnahmehälften 2 angepaßte Schubladenführungen eines Gehäuses einschiebbar ist.

## Ansprüche

1. Aufnahmeeinrichtung für mindestens zwei LWL-Spleißkassetten (12) vorbestimmter Dicke, welche parallele Wandungsansätze (3,4) aufweist, zwischen welchen Rinnen (5) zur Aufnahme der Spleißkassetten (12) gebildet sind, dadurch gekennzeichnet, daß die Mittellinien (22) der Wandungsansätze (3,4) in einem der Dicke einer LWL-Spleißkassette (12) entsprechenden Abstand (a) aufeinanderfolgen, und daß die Breite der Rinne (5) bzw. die Wandstärke der Einlegewandungen (15,16,17) der Spleißkassetten (12) kleiner als die gesamte Dicke der Spleißkassette (12) sind.

2. Aufnahmeeinrichtung nach Anspruch 1, dadurch gekennzeichnet, daß für jede Spleißkassette (12) eine einzige lang gestreckte Rinne (5) vorgesehen ist, welche jeweils durch an einer flachen Bodenwandung (1) angeordnete Wandungsansätze (3,4) gebildet sind.

3. Aufnahmeeinrichtung nach Anspruch 1 oder 2, dadurch gekennzeichnet, daß die Breite der Rinne (5) der Gesamtdicke zweier an einer Kassette (12) angeformter und einen Wandungsansatz (13) umgreifender Einlegewandungen entspricht.

4. Aufnahmeeinrichtung nach Anspruch 1 oder 2, dadurch gekennzeichnet, daß die Breite der Rinne (5) der Dicke einer Einlegewandung (15,16,17) entspricht.

5. Aufnahmeeinrichtung nach einem der Ansprüche 1 bis 4, dadurch gekennzeichnet, daß die Aufnahmeeinrichtung aus mindestens zwei gleichartigen Aufnahmeteilen (2) besteht, welche mit einer parallel zu den Wandungsansätzen (3,4) verlaufenden Fügeebene (9) insbesondere über Formschlußelemente (10,11) aneinandergefügt sind (Fig. 3).

6. Aufnahmeeinrichtung nach einem der Ansprüche 1 bis 5, dadurch gekennzeichnet, daß ein Aufnahmeteil aus zwei gleichartigen Aufnahmehälften (2) besteht, welche mit einer senkrecht zu den Wandungsansätzen (3,4) verlaufenden Fügungsebene (8) insbesondere formschlüssig (6,7) aneinandergefügt sind.

7. Aufnahmeeinrichtung nach einem der Ansprüche 1 bis 6, dadurch gekennzeichnet, daß die Spleißkassetten (12) durch federnde Rastelemente (19,20) in den Rinnen (5) gehalten sind.

8. Aufnahmeeinrichtung nach Anspruch 7, dadurch gekennzeichnet, daß sie Rastkanten (20) aufweist, hinter welche federnde Rastnasen (19) der Spleißkassetten (12) einrastbar sind.

9. Aufnahmeeinrichtung nach Anspruch 7 oder 8, dadurch gekennzeichnet, daß federnde Rastnasen (19) in eine Ausnehmung (18) eine Einlegewandung (15,16,17) eingeformt sind.

# Fig.1

# Fig.2

# Fig.3

18  16                    17  19
                                    18

14

Fig.4

                    12    18  15  18    13

19    17

18

Fig.5

12

                    2

Fig.6

12                12

12    12

            2

2

Fig.7

12

2

2

Fig.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A1-3217320 (ANT NACHRICHTENTECHNIK GMBH) <br> * Seite 8, Zeilen 18 - 25; Figuren 1, 2 * <br> --- | 1, 2, 4, 7 | G02B6/44 |
| D,A | DE-A1-3530625 (WALTER ROSE GMBH & CO KG) <br> * Ansprüche 1, 3; Figuren 1, 2 * <br> --- | 1, 2 | |
| A | DE-A1-3536241 (SIEMENS AG) <br> * Figuren 1, 2 * <br> --- | 1, 2 | |
| A | US-A-4266853 (T.N.HUTCHINS ET AL.) <br> * Figur 1 * <br> ----- | 6 | |

RECHERCHIERTE SACHGEBIETE (Int. Cl.5 )

G02B

Der vorliegende Recherchenbericht wurde für alle Patentansprüche erstellt

| Recherchenort | Abschlußdatum der Recherche | Prüfer |
|---|---|---|
| BERLIN | 10 JANUAR 1990 | FUCHS R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)